# EUROPEAN PATENT APPLICATION

(11) **EP 1 128 175 A1**
(43) Date of publication of application: **29.08.2001**
(21) Application number: 00600002.0
(22) Date of filing: 23.02.2000
(51) Int. Cl.: G01L 9/12

(54) **Long-term stable capacitive pressure sensor made with self-aligned process**

(71) Applicant: Ethniko Kentro Erevnas Fisikon Epistimon "Dimokritos", 15310 Attiki (GR); Tsoukalas, Dimitrios, 15310 Attiki (GR); Normand, Pascal, 15310 Attiki (GR)
(72) Inventor: Tsoukalas, Dimitrios, Agia Paraskevi, 15310 Athens (GR); Goustouridis, Dimitrios, Agia Paraskevi, 15310 Athens (GR); Chatzandroulis, Stavros, Agia Paraskevi, 15310 Athens (GR); Normand, Pascal, Agia Paraskevi, 15310 Athens (GR)
(74) Representative: Collingwood, Anthony Robert

(57) **Abstract**

A method for making capacitive silicon pressure sensors and pressure switches with high long-term stability is disclosed. The sensor is fabricated by wafer bonding of a silicon substrate wafer with another silicon wafer where a highly boron doped diaphragm is defined by a self-aligned doping process through a window defined on an insulating layer. The long-term stability of the device can only be achieved when the window is etched by reactive ion etching thus creating vertical window walls. The flatness of the diaphragm can be achieved if an insulating film is present on the backside of the substrate wafer that compensates the stress on the silicon diaphragm created by the insulating layer present on the bonded side.

## Description

Pressure sensing devices are of interest for a wide variety of applications in the fields of automotive, biomedical and industrial engineering. Micromachined sensors present inherent advantages over conventional devices because of their lower cost, based on the batch fabrication techniques and their higher performance. Silicon micromachined sensors have been fabricated since 1965 based on the piezoresistive principle and several devices are already in the market. At a later time capacitive type silicon pressure sensors have also been fabricated using different techniques. Capacitive devices are better suited for low power applications as well as for applications that need an increased miniaturization level. All the fabrication techniques of capacitive devices are based on the formation of a flexible electrode over an immobile electrode. Some techniques use the anodic bonding of a silicon wafer to a glass substrate to fabricate a single crystal silicon diaphragm as the flexible electrode over a metal plate deposited on the glass substrate [1-3, P1]. Some others use polycrystalline silicon for the fabrication of the flexible electrode the immobile electrode being formed on a single crystal silicon substrate [P2]. Other inventors use different forms of Silicon-On-Insulator material to make a FET based pressure sensor on wafer bonded material or a capacitive sensor on SIMOX. When a pressure switch is required the device must give information only when a given value of pressure is attained.

We have recently proposed a technique to fabricate a capacitive pressure sensor that utilizes single crystal material for both the flexible electrode as well as the substrate electrode using a self-aligned process that requires only three mask levels [4]. Relatively to a recently issued patent [P5] which also utilizes wafer bonding to make capacitive pressure sensors our process is simpler due to its self-aligned character.

In all the above approaches the long-term stability of the sensor or switch is of paramount importance and in the case of our invention it will be addressed in detail. Also some applications require the fabrication of flexible diaphragms that should be flat as for example the pressure measurement of the body by the tonometric technique [5].

It is the object of this invention to describe the fabrication process of a capacitive single crystal silicon sensor in order to achieve very good characteristics on long-term stability.

It is another object of this invention to describe the fabrication process of a capacitive single crystal silicon pressure sensor based on a self-aligned process that if combined with thin film stress engineering permits the fabrication of flat or deflected silicon diaphragms according to application.

It is another object of this invention to describe the fabrication process of a pressure switch based on the ohmic contact of two electrodes namely of the mobile and immobile electrodes made using a similar self-aligned process.

In the following we describe how these are accomplished.

A flexible single crystal boron doped electrode is formed over a cavity that is made by patterning an electrically insulating film (e.g thermally grown silicon dioxide) on the same silicon wafer with the flexible electrode. Another immobile electrode made on a doped substrate silicon wafer constitutes the other plate of the capacitor. The cavity is sealed by the flexible electrode and the substrate so that it is isolated from the outside ambient.

The way the insulating film is removed from the patterned areas has significant impact on the long-term stability of the sensor. If the etching of the insulating film is not anisotropic the sensor or the switch is not long term reliable since the diaphragm is never at the same position for the same applied pressure, as we shall demonstrate in the following. This constitutes a major point of the invention.

The flatness of the flexible membrane mostly depends on the stress that is exercised on it by the insulating film. To compensate this stress another insulating film is also formed on the other side of the substrate wafer. Depending on the applied pressure under measurement it is possible that the flexible membrane touches the substrate and the capacitance continues to change since a thin insulating film on the substrate electrode prevents electrical shorting between the diaphragm and the substrate. The substrate wafer also plays a protective role against overpressure for the flexible diaphragm.

When a pressure switch is required there is no insulating film on the surface of the immobile electrode. When the mobile electrode touches the immobile electrode current flows through this contact and a value of the corresponding pressure is detected.

The fabrication steps for the sensor or the switch are only three, namely the diaphragm size definition step, the substrate contact definition step and the metallization step. The thickness of the membrane is usually less than five microns and the gap spacing between the electrodes usually less than two microns. The sealing of the cavity is achieved by directly bonding the two wafers and annealing to strengthen the bonds. No alignment is necessary between the two wafers.

The above fabricated sensors or switches present exceptional characteristics on long-term stability and the possibility to influence the flatness enables their utilization in a variety of applications. The technique has also the advantage to lead to an advanced level of miniaturization of the sensor device.
The following drawings will illustrate better the invention
Fig. 1 (a) and (b) is a diagram of the pressure sensor and pressure switch respectively
Fig. 2 to fig. 4 are diagrams of the fabrication process steps of the sensor
Fig. 5 and Fig. 6 are Scanning Electron Microscopy images of cross sections of the diaphragm that underline the importance of vertical wall patterning of the cavity in the insulating film
Fig. 7 underlines the importance of the backside insulating film of the substrate wafer on the flatness of the diaphragm.

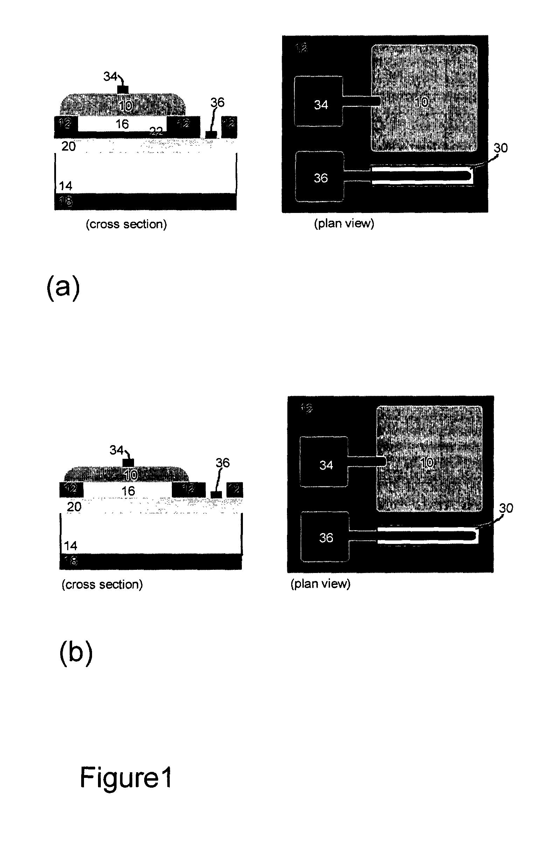

Referring to fig. 1(a) a flexible boron doped silicon diaphragm 10 touches at the edges of an electrically insulating film 12. The diaphragm makes the one plate of a capacitor the other plate being formed by the silicon wafer 14 that is enriched with dopants on its surface to form a *highly conductive layer.* Within the cavity 16 and between the two plates of the capacitor there is a gas of known pressure. For changes of the external pressure relative to the internal pressure of the cavity 16 there is a deflection of the flexible electrode 10. This deflection changes the value of the capacitance of the said capacitor. There is, therefore a one to one relationship between external pressure and measured capacitance that permits the estimation of the pressure if the said capacitance is known. The contact of the electrode 10 and of the substrate to the outside world are taken through thin metal films and wire bonding according to the usual procedures of integrated circuit technology.

When a pressure switch is desired we refer to fig. lb. In this device insulating film 22 is not present thus when the pressure reaches a certain value the flexible boron doped silicon diaphragm 10 directly touches wafer 14 which is enriched with dopants at its surface to make a highly conductive layer. When the two electrodes are in touch current flows through their contacted area. It is thus possible to relate the pressure value with the current flow. The contacts of the electrode 10 and the substrate with the outside world are taken through thin metal films and wire bonding according to the usual procedures of integrated circuit technology.

The walls of the said insulating film 12 that surrounds the cavity 16 must be as vertical as possible to guarantee the long-term stability of the pressure sensor.

To achieve flatness in the said diaphragm 10 an insulating thin film 18 must be present on the other side of the substrate wafer to compensate the stress induced on the diaphragm from the said insulating film 12. The relative physical dimensions of the sensor as they appear on the above figure are for illustrative purposes. The size of the sensor can vary according to the masks used during its fabrication and different area sensors can be fabricated on the same wafer.

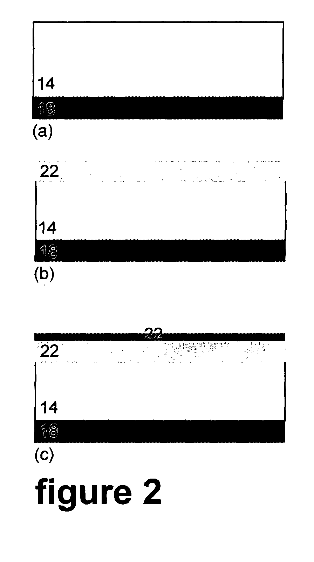

Fig. 2 to 4 show the fabrication process of the sensor. An insulating film 18 is first formed on the backside surface of a single silicon crystal wafer 14 of either p or n type. (Fig. 2). The backside insulating film is used for stress compensation purposes and controls the flatness of the fabricated pressure sensitive diaphragms. The front side of the wafer 14 is then doped with ion implantation to make a highly conductive layer 20. A thin insulating film 22 may also be formed afterwards.

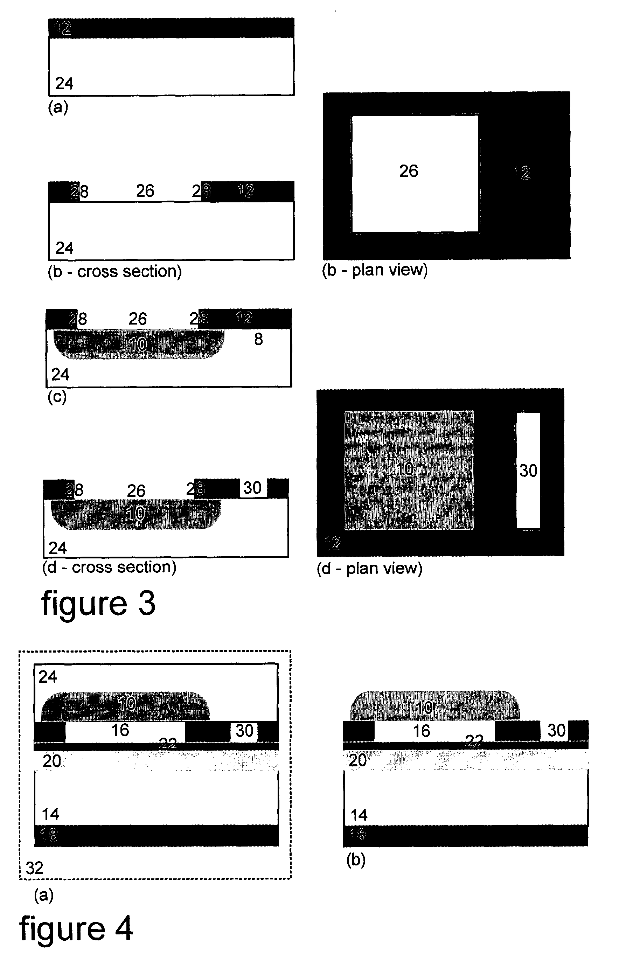

Another silicon wafer 24 is then taken and an insulating film 12 is formed on its surface (fig. 3). The insulating film 12 is then patterned using lithographic techniques and anisotropic etching techniques to remove the insulating film 12 from the window patterns 26. The anisotropic etching results in the formation of vertical walls 28 of the insulating film 12. The size of the pattern on the insulating film as well as the thickness of the insulating film practically define the nominal value of the capacitance.

Then the patterned said insulating film 12 is doped with boron impurities, preferably using ion implantation doping technique that enter into the said silicon wafer 24 only in the patterned areas 26 of the said insulating film 12. Further annealing drives the boron impurities to the required depth. The implantation and annealing steps adjust the final thickness of the pressure sensing diaphragm. The thickness of the diaphragm 10 and its surface area as well as the thickness of the insulating film 12 adjust the working pressure range of the sensor and its sensitivity. The areas under the insulating film 8 are protected from doping except from the areas that are near the edges of the window patterns 26 opened on the insulating film 12 that are doped mainly during the annealing step. In this way only the areas that will be used subsequently as the pressure sensitive diaphragms are doped and because of that the process is called self-aligned. Wafer 24 is then again patterned to open the contact holes 30 that will later be used for contacting with metal the substrate wafer 20.

Wafer 14 is then bonded to the wafer 24 to make a bonded wafer pair 32 as shown in Fig. 4. The bonding procedure is achieved by appropriately cleaning the wafer surfaces and then bringing them in contact in a clean room environment. To strengthen the bonding the structure is heated above 800 °C. No alignment is necessary between the two wafers.

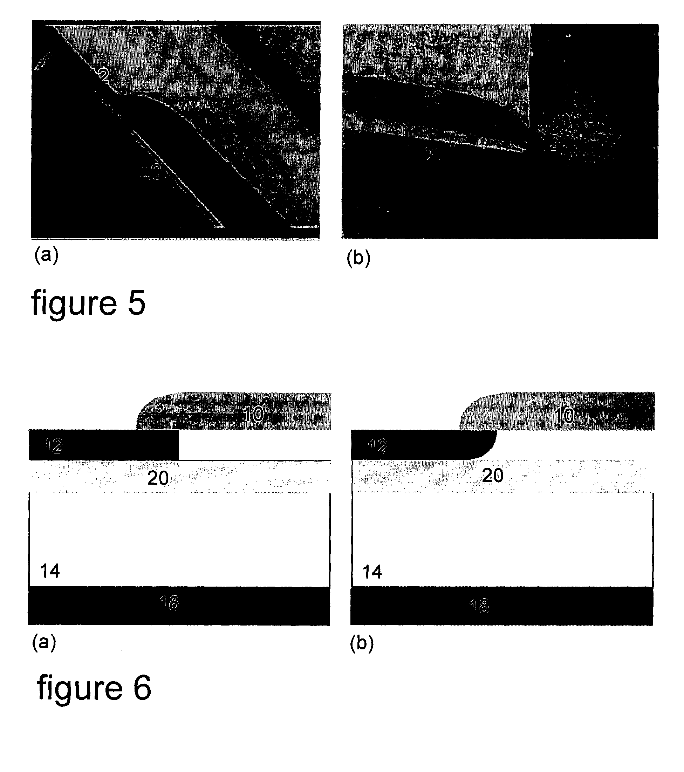

The non highly boron doped part of the wafer 24 is then removed with a selective etching solution that attacks the non highly doped silicon with much higher rates than the highly boron doped silicon areas. The result is the formation of boron doped silicon diaphragm 10 that stands on the said insulating film 12 over a distance that is comparable with the thickness of the said diaphragm 10. Insulating film 12 touches on its one side layer 20 of wafer 14 and at its other side diaphragm 10 at the areas that are around the edges of the window patterns 26. The walls of the cavity 16 defined in the insulating film 12 must be vertical so as to make sure that the diaphragm is fixed on top of the insulating film. The underneath part of the insulating film must also be directly bonded all around the edges of the cavity with the substrate (fig. 5(a) and 6(a)). To achieve such vertical walls 28 of the window patterns anisotropic etching of the insulating film 12 has to be used. This step guarantees the long-term stability of the resulting sensor. If isotropic etching is used (for example Hydrofluoric acid solution) to form the window patterns 26 the resulting in fig. 5(b) and 6(b) structure is obtained. In that case the underneath part of the insulating film at the edges of the cavity is partly free standing and the said silicon diaphragm 12 never comes back exactly at the same position when the same pressure is applied at a different time that negatively affects the long term stability of the sensor.

Thinning of wafer 24 can be performed by first mechanical means and finally using chemical selective etching solution. During the chemical etching solution wafer 14 is protected in its backside by the insulating film 18.

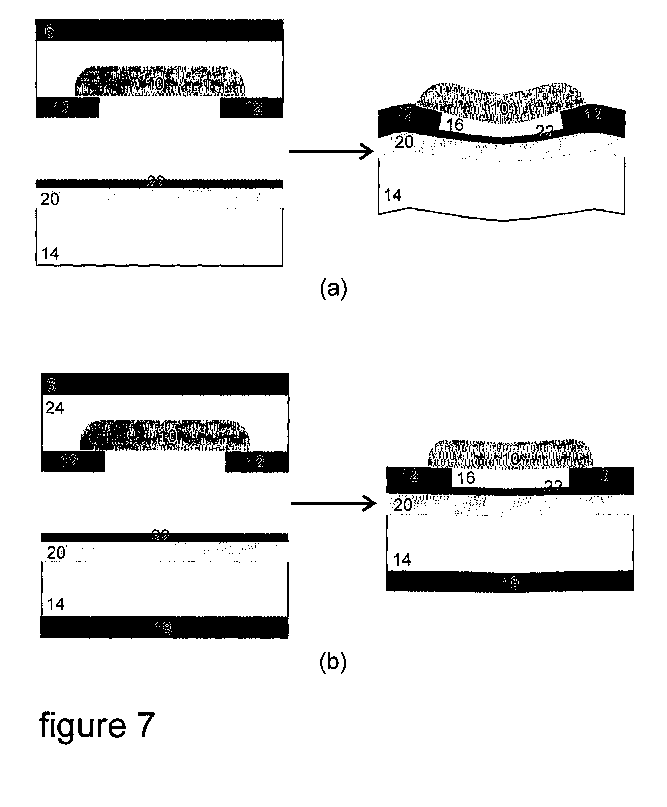

The flatness of the diaphragm 10 is controlled by the backside film 18 as illustrated in fig. 7.

Then, following common metallization techniques of microelectronics, metal contacts 34, 36 are fabricated for both the boron doped diaphragm 10 and substrate 20 respectively. The metal contacts are connected with metal pads where the sensor is connected with miniature wires to an external integrated circuit (not shown) and then to the outside word.

### REFERENCES

### Publications

[1] H-L. Chau and K.D. Wise 'An ultraminiature solid-state pressure sensor for a cardiovascular catheter', IEEE Trans. Electron Devices, ED-33, pp.343-349 (1988)
[2] M.J.S Smith, L. Bowman and J.D. Meindl 'Analysis, design and performance of a capacitive pressure sensor IC' IEEE Trans. Biomed. Eng., BME-33, pp 163-174
[3] R. Puers, E. Peeters, A. Van den Bossche and W. Sansen 'An implantable pressure sensor for use in cardiology' Sensors and Actuators, A21-A23, pp. 108-114 (1990)
[4] S. Chatzandroulis, D. Goustouridis, P. Normand and D. Tsoukalas 'A solid-state pressure-sensing microsystem for biomedical applications', Sensors and Actuators A62, pp. 551-555 (1997)
[5] B. Ziaie, T-W Wu, N. Kocaman, K. najafi and D. Anderson 'An impantable pressure sensor cuff for tonometric blood pressure measurements'

### US Patents

[P1} 5207103 5/1992 Wise K.
[P2] 5321989 6/1994 Zimmer G
[P3] 5578843 11/1996 Garabedian R
[P4] 5510276 4/1996 Diem B.
[P5] 5706565 1/1998 Sparks D.

## Claims

1. A capacitive pressure sensor with long-term stability comprised of:
• An integrally formed structure made out of a flexible highly conductive single crystal silicon electrode left after dissolving the lightly doped part of a single crystal silicon wafer bonded with a substrate silicon wafer
• A flexible electrode made out of silicon doped with any element or combination of elements so that it exhibits an etching selectivity with lightly doped silicon
• A flexible electrode standing at its border on an electrically insulating film over an air gap window with vertical walls etched by means of an anisotropical plasma etching within the insulating film
• A fixed electrode made out of a substrate silicon wafer sufficiently doped with impurities to become conductive.

2. The transducer as in claim 1 where the boron doped silicon diaphragm has been fabricated by doping through a window patterned with vertical walls on an insulating film that prevents doping to occur in its underneath.

3. The transducer as in claim 1 where only three masks are necessary for its complete fabrication including metallization step

4. The transducer as in claim 1 where no alignment is necessary between the two bonded wafers

5. The transducer as in any preceding claim where the boron doped silicon diaphragm stands on the window edges of the insulating film at a distance comparable with its thickness.

6. The transducer as in any preceding claim where the boron doped silicon diaphragm may include an electrically insulating film on one or its both sides

7. The transducer as in any preceding claim where the bonded surface of the substrate wafer may include a thin electrically insulating film to avoid electrical shorting of the capacitance between flexible and fixed electrode

8. The transducer as in any preceding claim where the substrate wafer has an insulating thick film on its backside to compensate for the stress of frontside insulating film and obtain a flat diaphragm.

9. The transducer as in any preceding claim where the cavity is filled with a gas of certain pressure or vacuum.

10. The transducer as in preceding claims where the electrically insulating film can be a thermally grown oxide or any electrically insulating film resisting high temperature treatment
